# EUROPEAN PATENT SPECIFICATION

(11) **EP 3 381 775 B1**
(45) Date of publication and mention of the grant of the patent: **27.01.2021**
(21) Application number: 18160527.0
(22) Date of filing: 07.03.2018
(51) Int. Cl.: B62J 6/05, B60Q 1/34

(54) **WINKER**
BLINKER
CLIGNOTANT

(30) Priority: 28.03.2017 JP 2017063245
(43) Date of publication of application: 03.10.2018
(73) Proprietor: Honda Motor Co., Ltd., Minato-ku, Tokyo 107-8556 (JP)
(72) Inventor: KUDO, Tomohiro, Wako-shi, Saitama 351-0193 (JP)
(74) Representative: Weickmann & Weickmann PartmbB

(56) References cited:
- JP-A- 2014 065 444
- JP-U- S57 114 785
- US-A- 5 499 169
- US-A- 5 820 254
- US-A- 5 938 322
- US-A1- 2009 237 231

## Description

### Technical Field

The present invention relates to a winker, and particularly, to a winker of a saddle-type vehicle.

### Background Art

As a related-art winker of a saddle-type vehicle, for example, JP-A-2005-82051 discloses a structure in which a holder is attached to each of left and right front forks, and a winker is attached to a vehicle body via this holder.

JP-A-2011-255725 discloses a structure in which a cable for supplying electric power to a direction indicator is inserted into a holder (stay) and a resistor for adjusting the electric power supplied to the direction indicator is accommodated in the holder.

In both JP-A-2005-82051 and JP-A-2011-255725, a wire harness extending from a winker extends through a holder. Therefore, a connector part provided at a tip of the wire harness is disposed at a position away from the winker. Therefore, in the structures described in JP-A-2005-82051 and JP-A-2011-255725, a dedicated member is required to hold and protect the connector part on a vehicle body side by some means, so that the number of parts increases. Further, the connector part has to be disposed at a predetermined position of the vehicle body, which causes a problem that wiring becomes long and arrangement of the wiring becomes complicated. A winker according to the preamble of claim 1 is shown in the document JPS57114785U.

The present invention has been made in view of the above circumstances, and an object of the present invention is to provide a winker which can eliminate the need for a dedicated member for protecting a connector part for the winker and can reduce the number of parts.
(1) In order to achieve the above object, a winker includes:
   a holder which is attached to a vehicle body;
   a winker body which is attached to one end portion of the holder via a support base part and includes an indicating part configured to emit light to indicate a turning direction of a vehicle; and
   a harness which is led out from the winker body,
   wherein the harness includes a winker side connector part coupled to a vehicle body side connector part,
   wherein the holder includes a hollow part having a space therein, and
   wherein the vehicle body side connector part and the winker side connector part are accommodated in the hollow part in a state of being coupled to each other.
(2) In the winker of (1),
   the holder may be formed with an opening at an end portion opposite to an attachment part to which the support base part of the winker body is attached, and
   the opening may be closed by a lid member.
(3) In the winker of (2),
   the holder may be formed with a lower hole at a lowermost part in a vehicle mounted state, through which a vehicle body side harness including the vehicle body side connector part is led out.
(4) In the winker of any one of (1) to (3),
   the winker body may include an LED light source in the indicating part and has a width longer than a height thereof, and
   the hollow part of the holder may have a height substantially equal to the height of the winker body.
(5) In the winker of (4),
   the holder may be formed with an annular attachment part which is fastened and fixed to an outer periphery of a front fork, and
   the attachment part may have a height substantially equal to a height of the hollow part.

### Effect of the Invention

According to the winker of (1), since the vehicle body side connector part and the winker side connector part are accommodated in the hollow part formed in the holder in a state of being coupled to each other, the harness at the winker side can be shortened and a dedicated member for protecting these connector parts is not necessary and thus the number of parts can be reduced. Further, since the connector parts are not exposed, the appearance design of the winker can be improved.

According to the winker of (2), since the holder is formed with the opening at the end portion opposite to the attachment part to which the support base part of the winker body is attached, connection of the connector parts accommodated in the hollow part is easier. Further, since the opening is closed by the lid member, the waterproof property can be enhanced and the appearance design can be improved.

According to the winker of (3), since the holder is formed with the lower hole at the lowermost part in the vehicle mounted state, from which the vehicle body side harness including the vehicle body side connector part is led out, the moisture accumulated in the space can be discharged from this lower hole. Further, since the lead-out position of the vehicle body side harness is provided at a lower part of the holder, the exposure of the vehicle body side harness can be suppressed and the appearance can be improved.

According to the winker of (4), since the winker body includes the LED light source in the indicating part and the width thereof is longer than the height thereof, and the height of the hollow part of the holder is substantially the same as the height of the winker body, the appearance is uniform and the design can be improved. Further, air resistance during running can be kept constant and the handling can be satisfactorily performed.

According to the winker of (5), since the holder is formed such that the height of the hollow part is substantially the same as the height of the annular attachment part which is fastened and fixed to the outer periphery of the front fork, the width of the attachment part can be increased, and the appearance design can be improved with good fastening to the front fork.

### Brief Description of Drawings

Fig. 1 is a cross-sectional view of a main part of a winker of a saddle-type vehicle according to an embodiment of the present invention.
Fig. 2 is an exploded perspective view of the winker shown in Fig. 1.

### Description of Embodiments

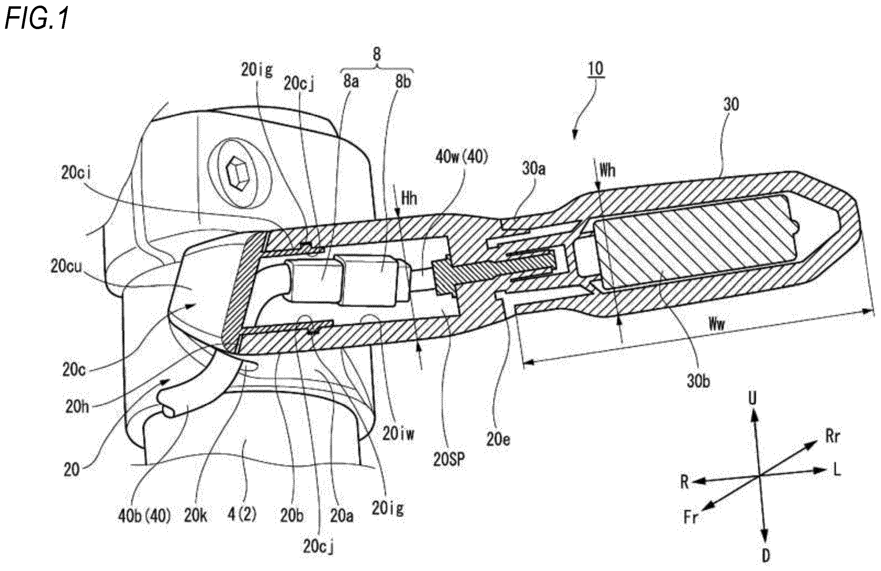

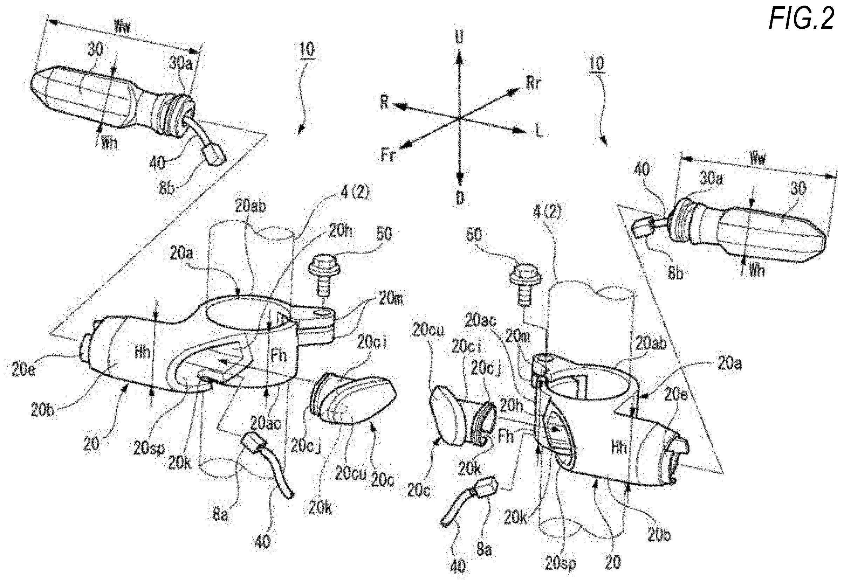

Hereinafter, a winker of a saddle-type vehicle according to an embodiment of the present invention will be described with reference to Figs. 1 and 2. The drawings should be seen based on a direction of reference numerals. In the drawings, the front side of the vehicle is denoted as Fr, the rear side is denoted as Rr, the left side is denoted as L, the right side is denoted as R, the upper side is denoted as U, and the lower side is denoted as D.

A vehicle body 2 (only a front fork 4 is shown) of a motorcycle (not shown) which is an example of the saddle-type vehicle, is generally provided with a total of four winkers 10 for emitting light to indicate a turning direction of the vehicle on both left and right sides at front and rear of the vehicle. As shown in Figs. 1 and 2, in the front side of the vehicle, a winker 10 is provided on each of left and right front forks 4 (in Fig. 1, only one at the left side is shown) for supporting a front wheel (not shown).

The winker 10 is attached to each of the left and right front forks 4 so as to extend outward in a vehicle width direction. The winker 10 includes a holder 20 which is attached to a front fork 4, a winker body 30 which is attached to one end portion of the holder 20 via a support base part 30a and includes an indicating part 30b configured to emit light to indicate a turning direction of the vehicle and a harness 40 which is led out from the winker body 30.

In the winker body 30, an LED light source is used for the indicating part 30b. The winker body 30 has a width Ww longer than a height Wh thereof and is provided to extend in the vehicle width direction.

The winker body 30 is fixed to the holder 20 by pushing the support base part 30a into an attachment part 20e of the holder 20.

The harness 40 includes a vehicle body side harness 40b and a winker side harness 40w. The vehicle body side harness 40b includes a vehicle body side connector part 8a, and the winker side harness 40w includes a winker side connector part 8b. Herein, the winker side harness 40w led out from the support base part 30a on a side of the winker body 30 is formed to be short, and the winker side connector part 8b is accommodated in a hollow part 20b (described later). The indicating part 30b of the winker 10 is connected to a vehicle power supply system by connecting the vehicle body side connector part 8a with the winker side connector part 8b. In the following description, the vehicle body side connector part 8a and the winker side connector part 8b may be referred to as a connector part 8.

The holder 20 is formed with an annular attachment part 20a attached to the front fork 4, and the hollow part 20b extends in a direction substantially tangential to the attachment part 20a. The hollow part 20b includes a space 20sp penetrating in a longitudinal direction of the hollow part 20b (substantially the tangential direction of the attachment part 20a). The vehicle body side connector part 8a and the winker side connector part 8b are accommodated in the space 20sp of the hollow part 20b of the holder 20.

The hollow part 20b of the holder 20 is formed with an opening 20h at an end portion opposite to the attachment part 20e to which the support base part 30a of the winker body 30 is attached. The opening 20h is closed by a lid member 20c.

The lid member 20c includes a lid body part 20cu having a shape corresponding to the opening shape of the opening 20h and a substantially elliptical cylindrical engagement leg 20ci extending from an inner surface side of the lid body part 20cu to an inner side of the space 20sp of the hollow part 20b. A projection strip part 20cj is formed over the entire outer peripheral surface on a distal end side of the engagement leg 20ci. An annular groove 20ig is formed on an inner periphery of an inner wall surface 20iw of the hollow part 20b.

Therefore, as the engagement leg 20ci is pushed into the space 20sp of the hollow part 20b, the lid body part 20cu closes the opening 20h, and the projection strip part 20cj is engaged in the groove 20ig to be sealed.

The holder 20 is formed with a lower hole 20k in the hollow part 20b. The lower hole 20k is formed at a lowermost part in a state where the winker 10 is mounted on the vehicle. The lower hole 20k is a part from which the vehicle body side harness 40b including the vehicle body side connector part 8a is led out. The lower hole 20k is formed as a notch structure at an edge part of the opening 20h. A notch-shaped lower hole 20k is also formed in the engagement leg 20ci of the lid member 20c. That is, the lower hole 20k is formed by joining a notch on a side of the hollow part 20b and a notch on a side of the lid member 20c.

The attachment part 20a for attaching the winker 10 to the front fork 4 has an annular shape as a whole, in which a first annular part 20ab and a second annular part 20ac are configured to approach and separate from each other in a circumferential direction. The attachment part 20a is fastened to an outer periphery of the front fork 4 by screwing a fastening bolt 50 to a joint part 20m extending radially from the first annular part 20ab and the second annular part 20ac. Accordingly, the holder 20 is fixed to the front fork 4. The attachment part 20a has a height Fh substantially equal to a height Hh of the hollow part 20b. That is, the holder 20 has substantially the same height.

The hollow part 20b of the holder 20 has the height Hh substantially equal to a height Wh of the winker body 30. Therefore, the winker 10 is formed into a straight line shape having substantially the same height from the holder 20 to the winker body 30.

Accordingly, in this embodiment, since the vehicle body side connector part 8a and the winker side connector part 8b are accommodated in the hollow part 20b formed in the holder 20 in a state of being coupled to each other, the harness 40 at the winker side can be shortened and a dedicated member for protecting these connector parts 8 is not necessary and thus the number of parts can be reduced. Further, since the connector parts 8 are not exposed, the appearance design of the winker 10 can be improved.

In this embodiment, since the holder 20 is formed with the opening 20h at the end portion opposite to the attachment part 20e to which the support base part 30a of the winker body 30 is attached, connection of the connector parts 8 accommodated in the hollow part 20b is easier. Further, since the opening 20h is closed by the lid member 20c, the waterproof property can be enhanced and the appearance design can be improved.

In this embodiment, since the holder 20 is formed with the lower hole 20k at the lowermost part in the vehicle mounted state, through which the vehicle body side harness 40b including the vehicle body side connector part 8a is led out, the moisture accumulated in the space 20sp can be discharged from this lower hole 20k. Further, since the lead-out position of the vehicle body side harness 40b is provided at a lower part of the holder 20, the exposure of the vehicle body side harness 40b can be suppressed and the appearance can be improved.

In this embodiment, since the winker body 30 includes the LED light source in the indicating part 30b and the width Ww thereof is longer than the height Wh thereof, and the height Hh of the hollow part 20b of the holder 20 is substantially the same as the height Wh of the winker body 30, the appearance is uniform and the design can be improved. Further, air resistance during running can be kept constant and the handling can be satisfactorily performed.

In this embodiment, since the holder 20 is formed such that the height Hh of the hollow part 20b is substantially the same as the height Fh of the annular attachment part 20a which is fastened and fixed to the outer periphery of the front fork 4, the width of the attachment part 20a can be increased, and the appearance design can be improved with good fastening to the front fork 4.

Although an embodiment of the present invention has been described above, the present invention is not limited to this embodiment but can be modified as appropriate.

For example, in the above embodiment, the winker on the front part of the motorcycle is exemplified, but the present invention is not limited thereto, and a winker at the rear part of the motorcycle can also be applicable. Also, a saddle-type vehicle other than motorcycles or the like can be applicable.

Although the holder 20 is configured to be attached to the front fork 4, the present invention is not limited thereto, and the holder 20 may be attached to any position of the vehicle body 2.

In addition, in the above embodiment, the lower hole 20k has a separated structure formed in both the hollow part 20b and the lid member 20c, but the present invention is not limited thereto, and a through hole may be formed in either the hollow part 20b or the lid member 20c. The attaching structure of the hollow part 20b and the lid member 20c and the attaching structure of the hollow part 20b and the winker body 30 are not limited to the structures shown the drawings.

## Claims

1. A winker (10) for a saddle-type vehicle comprising:
a holder (20) which is attached to a vehicle body (2);
a winker body (30) which is attached to one end portion of the holder (20) via a support base part (30a) and includes an indicating part (30b) configured to emit light to indicate a turning direction of a vehicle; and
a harness (40) which is led out from the winker body (30),
wherein the harness (40) includes a winker side connector part (8b) coupled to a vehicle body side connector part (8a),
wherein the holder (20) includes a hollow part (20b) having a space (20sp) therein,
wherein the vehicle body side connector part (8a) and the winker side connector part (8b) are accommodated in the hollow part (20b) in a state of being coupled to each other, and
wherein the holder (20) is formed with an opening (20h) at an end portion opposite to an attachment part (20e) to which the support base part (30a) of the winker body (30) is attached;
**characterized in that**
the opening (20h) is closed by a lid member (20c),
the holder (20) is formed with a lower hole (20k) at a lowermost part in a vehicle mounted state, though which a vehicle body side harness (40b) including the vehicle body side connector part (8a) is led out,
the winker body (30) includes an LED light source in the indicating part (30b) and has a width (Ww) longer than a height (Wh) thereof, and
the hollow part (20b) of the holder (20) has a height (Hh) substantially equal to the height (Wh) of the winker body (30).

2. The winker (10) according to claim 1,
wherein the holder (20) includes an annular attachment part (20a) which is fastened and fixed to an outer periphery of a front fork (4), and
wherein the attachment part (20a) has a height (Fh) substantially equal to a height (Hh) of the hollow part (20b).

## Patentansprüche

1. Blinker (10) für ein Satteltyp-Fahrzeug, umfassend:
einen Halter (20), welcher an einem Fahrzeugkörper (2) angebracht ist;
einen Blinkerkörper (30), welcher über einen Halterungsbasisteil (30a) an einem Endabschnitt des Halters (20) angebracht ist und einen Anzeigeteil (30b) umfasst, welcher dazu eingerichtet ist, Licht zu emittieren, um eine Abbiegerichtung eines Fahrzeugs anzuzeigen; und
einen Kabelbaum (40), welcher aus dem Blinkerkörper (30) herausgeführt ist,
wobei der Kabelbaum (40) einen seitlichen Blinkerverbindungsteil (8b) umfasst, welcher mit einem seitlichen Fahrzeugkörperverbindungsteil (8a) gekoppelt ist,
wobei der Halter (20) einen hohlen Teil (20b) umfasst, welcher einen Raum (20sp) darin aufweist,
wobei der seitliche Fahrzeugkörperverbindungsteil (8a) und der seitliche Blinkerverbindungsteil (8b) in einem Zustand, in welchem sie miteinander gekoppelt sind, in dem hohlen Teil (20b) aufgenommen sind und
wobei der Halter (20) an einem Endabschnitt, welcher einem Anbringungsteil (20e) entgegengesetzt ist, an welchem der Halterungsbasisteil (30a) des Blinkerkörpers (30) angebracht ist, mit einer Öffnung (20h) gebildet ist;
**dadurch gekennzeichnet, dass**
die Öffnung (20h) durch ein Deckelelement (20c) geschlossen ist,
der Halter (20) in einem an einem Fahrzeug montierten Zustand an einem untersten Teil mit einem unteren Loch (20k) gebildet ist, durch welches ein seitlicher Fahrzeugkörperkabelbaum (40b) herausgeführt ist, welcher den seitlichen Fahrzeugkörperverbindungsteil (8a) umfasst,
der Blinkerkörper (30) eine LED-Lichtquelle in dem Anzeigeteil (30b) umfasst und eine Breite (Ww) aufweist, welche länger als eine Höhe (Wh) davon ist, und
der hohle Teil (20b) des Halters (20) eine Höhe (Hh) aufweist, welche im Wesentlichen gleich der Höhe (Wh) des Blinkerkörpers (30) ist.

2. Blinker (10) nach Anspruch 1,
wobei der Halter (20) einen ringförmigen Anbringungsteil (20a) umfasst, welcher an einer äußeren Peripherie einer Vordergabel (4) befestigt und fixiert ist, und
wobei der Anbringungsteil (20a) eine Höhe (Fh) aufweist, welche im Wesentlichen gleich einer Höhe (Hh) des hohlen Teils (20b) ist.

## Revendications

1. Clignotant (10) pour un véhicule du type à selle comprenant :
un support (20) qui est fixé à un corps de véhicule (2) ;
un corps de clignotant (30) qui est fixé à une portion d'extrémité du support (20) via une partie de base de soutien (30a) et comporte une partie d'indication (30b) configurée pour émettre de la lumière pour indiquer une direction de virage d'un véhicule ; et
un harnais (40) qui est conduit à l'extérieur à partir du corps de clignotant (30),
dans lequel le harnais (40) comporte une partie de connecteur de côté de clignotant (8b) accouplée à une partie de connecteur de côté de corps de véhicule (8a),
dans lequel le support (20) comporte une partie creuse (20b) ayant un espace (20sp) dans celle-ci,
dans lequel la partie de connecteur de côté de corps de véhicule (8a) et la partie de connecteur de côté de clignotant (8b) sont logées dans la partie creuse (20b) dans un état où elles sont accouplées l'une à l'autre, et
dans lequel le support (20) est formé avec une ouverture (20h) au niveau d'une portion d'extrémité opposée à une partie de fixation (20e) à laquelle la partie de base de soutien (30a) du corps de clignotant (30) est fixée ;
**caractérisé en ce que**
l'ouverture (20h) est fermée par un élément couvercle (20c),
le support (20) est formé avec un trou inférieur (20k) au niveau d'une partie la plus inférieure dans l'état monté sur véhicule, à travers lequel un harnais de côté de corps de véhicule (40b) comportant la partie de connecteur de côté de corps de véhicule (8a) est conduit à l'extérieur,
le corps de clignotant (30) comporte une source de lumière à LED dans la partie d'indication (30b) et a une largeur (Ww) plus longue qu'une hauteur (Wh) de celui-ci, et
la partie creuse (20b) du support (20) a une hauteur (Hh) sensiblement égale à la hauteur (Wh) du corps de clignotant (30).

2. Clignotant (10) selon la revendication 1,
dans lequel le support (20) comporte une partie de fixation annulaire (20a) qui est assujettie et fixée à une périphérie extérieure d'une fourche avant (4), et
dans lequel la partie de fixation (20a) a une hauteur (Fh) sensiblement égale à une hauteur (Hh) de la partie creuse (20b).
